# EUROPÄISCHE PATENTSCHRIFT

(11) **EP 1 580 980 B1**
(45) Veröffentlichungstag und Bekanntmachung des Hinweises auf die Patenterteilung: **28.12.2011**
(21) Anmeldenummer: 05100371.3
(22) Anmeldetag: 21.01.2005
(51) Int. Cl.: H04N 1/401, H04N 1/407

(54) **Verfahren und Druckplatte zum Abgleichen der Belichtungsköpfe in einem Belichter für Druckvorlagen**
Method and printing plate for adjusting exposure heads in an exposure unit for print data
Procédé et cliché pour égaliser les têtes d'exposition dans une unité d'exposition des données d'impression

(30) Priorität: 19.02.2004 DE 102004008074
(43) Veröffentlichungstag der Anmeldung: 28.09.2005
(73) Patentinhaber: Heidelberger Druckmaschinen Aktiengesellschaft, 69115 Heidelberg (DE)
(72) Erfinder: Liebig, Norbert c/o Heidelberger Druckmaschinen, D-24244 Deutschland (DE)

(56) Entgegenhaltungen:
- EP-A- 1 292 117
- WO-A-00/36819
- US-A1- 2002 196 473
- US-B1- 6 618 158

## Beschreibung

Die Erfindung bezieht sich auf das Gebiet der elektronischen Reproduktionstechnik und betrifft ein Verfahren zum Abgleichen der Belichtungsköpfe eines Belichters, insbesondere eines Außentrommelbelichters, der Druckvorlagen auf Druckplatten aufzeichnet. Weiterhin betrifft die Erfindung eine Testform zur Messung und zum Vergleich der in den Belichtungsköpfen eingestellten Belichtungsintensitäten.

In der Reproduktionstechnik werden Druckvorlagen für Druckseiten erzeugt, die alle zu druckenden Elemente wie Texte, Grafiken und Bilder enthalten. Für den farbigen Druck wird für jede Druckfarbe eine separate Druckvorlage erzeugt, die alle Elemente enthält, die in der jeweiligen Farbe gedruckt werden. Für den Vierfarbdruck sind das die Druckfarben Cyan (C), Magenta (M), Gelb (Y) und Schwarz (K). Die nach Druckfarben separierten Druckvorlagen werden auch Farbauszüge genannt. Die Druckvorlagen werden in der Regel gerastert und mit einem Beliebter auf Filme belichtet, mit denen dann Druckplatten für das Drucken hoher Auflagen hergestellt werden. Alternativ können die Druckvorlagen in speziellen Belichtungsgeräten auch gleich auf Druckplatten belichtet werden oder sie werden direkt als digitale Daten an eine digitale Druckmaschine übergeben. Dort werden die Druckvorlagendaten dann beispielsweise mit einer in die Druckmaschine integrierten Belichtungseinheit auf Druckplatten belichtet, bevor unmittelbar anschließend der Auflagendruck beginnt.

Nach dem heutigen Stand der Technik werden die Druckvorlagen elektronisch reproduziert. Dabei werden Bilder in einem Farbscanner gescannt und in Form von digitalen Daten gespeichert. Texte werden mit Textverarbeitungsprogrammen erzeugt und Grafiken mit Zeichenprogrammen. Mit einem Layoutprogramm werden die Bild-, Text- und Grafik-Elemente zu einer Druckseite zusammengestellt. Die Daten mehrerer Druckseiten werden mit den Daten weiterer Elemente, wie Passkreuzen, Schnittmarken und Falzmarken sowie Druckkontrollfeldern, zu Druckvorlagen für einen Druckbogen zusammengefasst. Nach der Separation in die Druckfarben liegen die Druckvorlagen dann in digitaler Form vor. Als Datenformate zur Beschreibung der Druckvorlagen werden heute weitgehend die Seitenbeschreibungssprachen Postscript und PDF (Portable Document Format) verwendet. Die Postscript- bzw. PDF-Daten werden vor der Aufzeichnung der Druckvorlagen in einem Raster-Image-Prozessor (RIP) in einem ersten Schritt in Farbauszugswerte für die Farbauszüge CMYK umgerechnet. Dabei entstehen für jeden Bildpunkt vier Farbauszugswerte als Tonwerte im Wertebereich von 0 bis 100%. Die Farbauszugswerte sind ein Maß für die Farbdichten, mit denen die vier Druckfarben Cyan, Magenta, Gelb und Schwarz auf dem Bedruckstoff gedruckt werden. In Sonderfällen, in denen mit mehr als vier Farben gedruckt wird (Schmuckfarben), ist jeder Bildpunkt durch so viele Farbauszugswerte beschrieben, wie es Druckfarben gibt. Die Farbauszugswerte können z.B. mit 8 bit je Bildpunkt und Druckfarbe als Datenwerte gespeichert sein, womit der Wertebereich von 0 % bis 100% in 256 Tonwertstufen unterteilt ist.

Unterschiedliche Tonwerte eines zu reproduzierenden Farbauszugs lassen sich im Druck nur durch eine Flächenmodulation der aufgetragenen Druckfarben, d.h. durch eine Rasterung, wiedergeben. Die Flächenmodulation der Druckfarben kann beispielsweise nach einem Verfahren zur Punktrasterung erfolgen, bei dem die verschiedenen Tonwertstufen der Farbauszugsdaten in Rasterpunkte unterschiedlicher Größe umgewandelt werden, die in einem regelmäßigen Raster mit sich periodisch wiederholenden Rasterzellen angeordnet sind. Eine Rasterzelle für ein typisches 60er Raster umfasst ein Quadrat mit 1/60 cm Kantenlänge, d.h. eine Rasterzelle hat die Abmessungen 166 µm × 166 µm. Bei der Aufzeichnung der Farbauszüge auf eine Druckplatte werden die Rasterpunkte in den einzelnen Rasterzellen aus Belichtungspunkten zusammengesetzt, die um eine Größenordnung kleiner als die Rasterpunkte sind. Eine typische Auflösung der Belichtungspunkte ist beispielsweise 1000 Belichtungspunkte je Zentimeter, d.h. ein Belichtungspunkt hat die Abmessungen 10 µm × 10 µm. Die Umsetzung der Farbauszugswerte in Rasterpunkte geschieht in einem zweiten Schritt bei der weiteren Verarbeitung der Farbauszugsdaten im Raster-Image-Prozessor, wodurch die Farbauszugsdaten in hochaufgelöste Binärwerte mit nur zwei Helligkeitswerten (belichtet bzw. nicht belichtet) umgewandelt werden, die das Muster des modulierten Punktrasters bilden. Auf diese Weise werden die Druckvorlagendaten jedes Farbauszugs in Form einer hochaufgelösten Rasterbitmap beschrieben, die für jeden der Belichtungspunkte auf der Druckfläche ein Bit enthält, das angibt, ob dieser Belichtungspunkt zu belichten ist oder nicht. Die Tonwerte werden auf diese Weise in eine entsprechende Flächendeckung auf der Druckvorlage umgewandelt, die so wie die Tonwerte in Prozent angegeben wird. Die Flächendeckung gibt an, wie viel Prozent der Fläche einer Rasterzelle belichtet wird.

In den Aufzeichnungsgeräten, die in der elektronischen Reproduktionstechnik zur Belichtung von Druckvorlagen eingesetzt werden, wird ein Belichtungsstrahl erzeugt, beispielsweise mit einer Laserdiode ein Laserstrahl, durch optische Mittel geformt und auf das Aufzeichnungsmaterial fokussiert und mittels eines Ablenksystems Punkt- und Linienweise über das Aufzeichnungsmaterial abgelenkt. Es gibt auch Aufzeichnungsgeräte, die zur Erhöhung der Belichtungsgeschwindigkeit ein Bündel von Laserstrahlen erzeugen, z.B. mit einer separaten Laserlichtquelle für jeden Laserstrahl, und mit jedem Überstreichen des Aufzeichnungsmaterials mehrere Aufzeichnungslinien der Druckform gleichzeitig belichten. Die Druckformen können auf Filmmaterial belichtet werden, so dass sogenannte Farbauszugsfilme entstehen, die anschließend mittels eines fotografischen Umkopierverfahrens zur Herstellung von Druckplatten dienen. Statt dessen können auch die Druckplatten selbst in einem Plattenbelichter oder direkt in einer digitalen Druckmaschine belichtet werden, in die eine Einheit zur Plattenbelichtung integriert ist. Das Aufzeichnungsmaterial kann sich auf einer ebenen Fläche befinden (Flachbettbelichter), in einer zylindrischen Mulde (Innentrommelbelichter) oder auf einer Trommel (Außentrommelbelichter).

Flachbettbelichter arbeiten überwiegend mit einem schnell rotierenden Polygonspiegel, dessen Spiegelflächen den Laserstrahl quer über das Aufzeichnungsmaterial lenken, während gleichzeitig das Aufzeichnungsmaterial senkrecht zur Ablenkrichtung des Laserstrahls bewegt wird. Auf diese Weise wird Aufzeichnungslinie für Aufzeichnungslinie belichtet. Da sich bei der Bewegung des Laserstrahls über das Aufzeichnungsmaterial die Länge des Lichtwegs ändert, ist eine aufwendige Abbildungsoptik erforderlich, die die dadurch bedingte Größenänderungen des Belichtungspunktes kompensiert.

Bei einem Innentrommelbelichter wird das zu belichtende Material auf der Innenfläche eines teilweise offenen Hohlzylinders montiert und mit einem Laserstrahl belichtet, der entlang der Zylinderachse auf eine Ablenkvorrichtung gerichtet wird, die den Laserstrahl senkrecht auf das Material reflektiert. Die Ablenkvorrichtung, ein Prisma oder ein Spiegel, rotiert im Betrieb mit hoher Drehzahl und wird dabei in Richtung der Zylinderachse bewegt, so dass der abgelenkte Laserstrahl kreisförmige oder schraubenförmige Aufzeichnungslinien auf dem Material beschreibt.

Bei einem Außentrommelbelichter wird das zu belichtende Material in Form von Filmen oder Druckplatten auf eine drehbar gelagerte Trommel montiert. Während die Trommel rotiert, wird ein Belichtungskopf in einem relativ kurzen Abstand axial an der Trommel entlang bewegt. Der Belichtungskopf wird in der Vorschubrichtung mittels einer Vorschubspindel bewegt, mit der er formschlüssig verbunden ist und die mit einem Vorschubantrieb in Drehbewegung versetzt wird. Der Belichtungskopf fokussiert einen oder mehrere Laserstrahlen auf die Trommeloberfläche, die die Trommeloberfläche in Form von Schraubenlinien überstreichen. Auf diese Weise werden bei jeder Trommelumdrehung eine bzw. mehrere Aufzeichnungslinien auf das Aufzeichnungsmaterial belichtet.

Um die Belichtungszeit zu verkürzen und damit die Wirtschaftlichkeit des Belichters zu erhöhen, arbeiten Außentrommelbelichter bevorzugt mit einem oder mehreren Belichtungsköpfen, die jeder ein Bündel von N Laserstrahlen mittels einer Belichtungsoptik als ein in Achsrichtung der Belichtungstrommel orientiertes lineares Array von Belichtungspunkten auf der Oberfläche des Aufzeichnungsmaterials abbilden. Wenn mehrere Belichtungsköpfe vorhanden sind, sind die Belichtungsköpfe beispielsweise auf einem Belichtungskopfträger angeordnet, der mit der Vorschubspindel verbunden ist, so dass durch die Drehbewegung der Vorschubspindel alle Belichtungsköpfe gemeinsam in Vorschubrichtung an der Belichtungstrommel entlang bewegt werden. Die Belichtungsköpfe sind in Achsrichtung der Belichtungstrommel in einem Abstand angeordnet, der ein Bruchteil der axialen Trommellänge ist, zum Beispiel bei drei Belichtungsköpfen ein Drittel der axialen Trommellänge. Um eine Druckvorlage über die gesamte Trommellänge aufzuzeichnen, braucht der Belichtungskopfträger mittels der Vorschubspindel nur über eine Strecke bewegt zu werden, die dem Abstand der Belichtungsköpfe entspricht. Jeder Belichtungskopf belichtet dann nur ein Aufzeichnungsband der Druckvorlage. Entsprechend kurz ist die Aufzeichnungszeit für die Druckvorlage.

An der Grenze zwischen den Aufzeichnungsbändern, die von den verschiedenen Belichtungsköpfen aufgezeichnet werden, müssen auch die erzeugten Flächendeckungen innerhalb einer engen Toleranz gleich sein, wenn die Belichtungsköpfe mit dem jeweils gleichen Tonwert angesteuert werden. Sonst entsteht ein störender Dichtesprung, für den das Auge in einer einheitlichen Fläche gleichen Tonwertes besonders empfindlich ist. Bei einem gleichbleibenden Tonwert kann die erzeugte Flächendeckung in bestimmten Grenzen durch die Veränderung der optischen Leistung der Laserstrahlen in den Belichtungsköpfen beeinflusst werden. Auf diese Weise können die Belichtungsköpfe so aufeinander abgeglichen werden, dass beim Übergang von einem Aufzeichnungsband zum nächsten kein Dichtesprung entsteht.

Ein solcher Abgleich zwischen zwei benachbarten Belichtungsköpfen könnte grundsätzlich mit einem iterativen Verfahren durchgeführt werden, bei dem die Laserleistung des einen Belichtungskopfes unverändert bleibt und die des anderen Belichtungskopfes schrittweise verändert wird. Jedes Mal wird eine Fläche mit dem gleichen Tonwert aufgezeichnet und die Aufzeichnung visuell beurteilt.

Dies wird solange wiederholt, bis kein Dichtesprung mehr sichtbar ist. Dann wird in gleicher Weise der nächste Belichtungskopf abgeglichen, usw. Ein solches Verfahren wäre sehr zeitaufwendig, da die Belichtungsköpfe für jede Testbelichtung eine Vorschubstrecke durchlaufen müssen, die der Breite eines Aufzeichnungsbandes entspricht. Außerdem wäre der Verbrauch an Aufzeichnungsmaterial für die Testbelichtungen sehr hoch. Das iterative Verfahren kann durch eine zusätzliche Dichtemessung der aufgezeichneten Flächendeckungen beschleunigt werden. Wegen der Fähigkeit des Auges, auch sehr geringe Dichteänderungen unter 0,5% wahrzunehmen, und andererseits eines typischen Messfehlers von mehr als 1% reicht eine solchen Messung und eine daraus berechnete Änderung der Laserleistung allein für den optimalen Abgleich jedoch nicht aus. Die Messergebnisse können bestenfalls zum Auffinden günstiger Startwerte für die Iterationen herangezogen werden.

In der EP-0529530-B1 wird ein Verfahren zur Kalibrierung eines Mehrkanal-Druckers beschrieben, der mit mehreren Laserdioden parallele Laserstrahlen erzeugt und auf ein thermisches Aufzeichnungsmaterial fokussiert. Mit jeder Laserdiode wird separat ein Testmuster geschrieben, wobei die Laserdioden mit bekannten Tonwerten angesteuert werden, und die Dichte der Testmuster gemessen. Aus dem Vergleich der gemessenen Dichten mit den Eingangstonwerten werden korrigierte Ansteuerwerte berechnet, mit denen alle Laserdioden den gleichen Dichtewert erzeugen.

In der EP-1027679-B1 wird ein Verfahren und eine Vorrichtung zur Kalibrierung eines Bilderzeugungsgeräts mit mehreren Bildausgängen vorgeschlagen. Die Bildausgänge sind gepulste Laserdioden, die mit einem veränderlichen Laserstrom und einer veränderlichen Pulsdauer angesteuert werden, um auf einem Aufzeichnungsmedium unterschiedliche Dichten zu erzeugen. Mit jeder Laserdiode wird ein Testmuster mit mehreren Testfeldern unterschiedlicher Solldichte belichtet, und anschließend wird die aufgezeichnete Dichte der Testfelder gemessen. Für jeden Satz von Testfeldern mit gleicher Solldichte wird eine Antwortfunktion gebildet, die die aufgezeichnete Dichte in Beziehung zum Laserstrom und zur Pulsdauer setzt. Auf der Basis der Differenz zwischen den gemessenen Dichten und den nach der Antwortfunktion berechneten Dichten werden die Ansteuerwerte für die einzelnen Laserdioden korrigiert, wobei die aufgezeichneten Dichtevariationen zwischen den Laserdioden reduziert werden.

Die bisher bekannten Verfahren zum Abgleichen der Belichtungsköpfe eines Belichters sind zeitaufwändig oder sie erreichen nicht die für die Anwendung in einem Druckvorlagenbelichter erforderliche hohe Genauigkeit.

Es ist deshalb die Aufgabe der vorliegenden Erfindung, ein mit weniger Zeitaufwand arbeitendes sowie zuverlässiges und ausreichend genaues Verfahren zum Abgleichen der Belichtungsköpfe in einem Druckvorlagenbelichter anzugeben. Eine weitere Aufgabe ist es, eine Testform anzugeben, mit der die von den einzelnen Belichtungsköpfen aufgezeichneten Flächendeckungen in einfacher Weise verglichen werden können. Die Aufgabe wird gelöst, indem jeweils eine Testform in jedem Aufzeichnungsband, das einem Belichtungskopf zugeordnet ist, belichtet wird und die aufgezeichneten Flächendeckungen in aneinander grenzenden Aufzeichnungsbändern visuell verglichen werden. Die Testform ermöglicht ohne eine Dichtemessung die sehr genaue Quantifizierung der Unterschiede der aufgezeichneten Flächendeckungen, aus denen entsprechende Korrekturwerte für die Laserleistungen in den Belichtungsköpfen abgeleitet werden. Durch das erfindungsgemäße Verfahren können mit einer Testbelichtung die notwendigen Korrekturwerte für alle Belichtungsköpfe gleichzeitig festgestellt werden. Damit kann der vollständige Abgleich der Belichtungsköpfe mit nur wenigen Iterationsschritten erreicht werden.

Die Erfindung wird anhand der Figuren näher beschrieben.
Es zeigen:
- Fig. 1: den Aufbau eines Außentrommelbelichters,
- Fig. 2: die aufgezeichnete Druckvorlage auf einer abgewickelten Trommeloberfläche,
- Fig. 3: das Strahlprofil eines Laserstrahls,
- Fig. 4: die Wirkungsweise einer positiv arbeitenden und einer negativ arbeitenden Druckplatte,
- Fig. 5: den Aufbau einer Testform,
- Fig. 6: Beispiele für ein frequenzmoduliertes Raster,
- Fig. 7: eine Testbelichtung mit mehreren Testformen,
und
- Fig. 8: eine Auswertungstabelle.

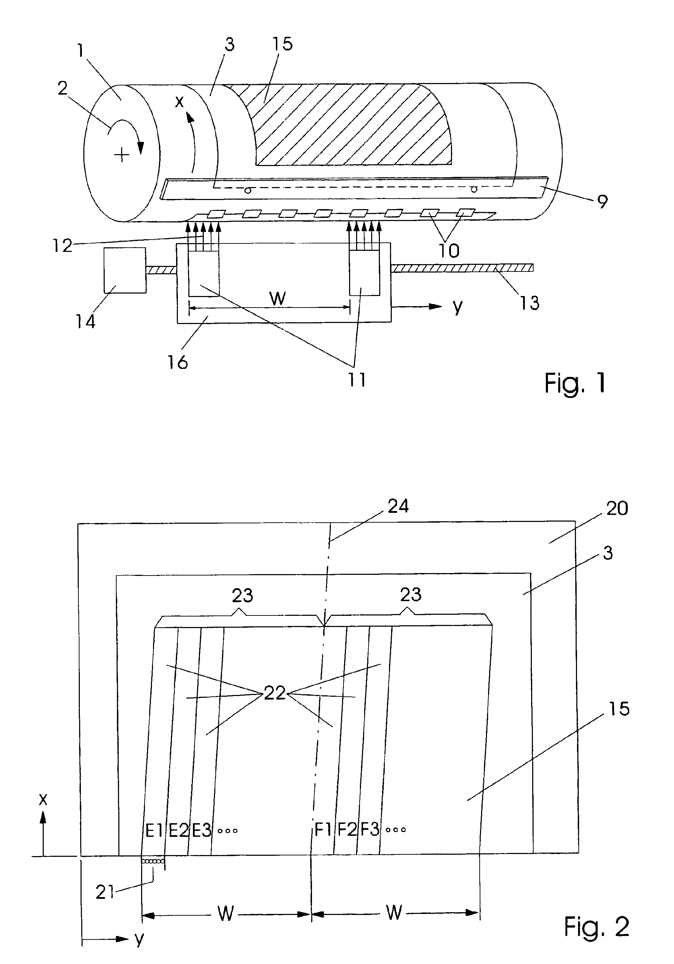

Fig. 1 zeigt schematisch den Aufbau eines Außentrommelbelichters zur Belichtung einer Druckvorlage 15 auf ein Aufzeichnungsmaterial, in diesem Beispiel auf eine Druckplatte 3. Eine Belichtungstrommel 1 ist drehbar gelagert und kann mit einem nicht gezeigten Rotationsantrieb in Richtung des Rotationspfeils 2 in eine gleichmäßige Rotationsbewegung versetzt werden. Auf der Belichtungstrommel 1 ist eine unbelichtete Druckplatte 3 mittels einer Klemmleiste 9 an der Vorderkante und mittels Klemmstücken 10 an der Hinterkante fixiert. Die Druckplatte 3 wird flächig mittels einer in Fig. 1 nicht gezeigten Vakuumeinrichtung, die die Druckplatte 3 durch Löcher in der Trommeloberfläche ansaugt, auf der Trommeloberfläche gehalten, damit die Druckplatte 3 nicht durch die Fliehkräfte bei der Rotation der Belichtungstrommel 1 abgelöst wird.

Mehrere Belichtungsköpfe 11, die auf einem gemeinsamen Belichtungskopfträger 16 angeordnet sind, werden in einem relativ kurzen Abstand axial an der Belichtungstrommel 1 entlang bewegt, während die Belichtungstrommel 1 rotiert. Jeder Belichtungskopf 11 fokussiert ein Bündel von Belichtungsstrahlen, in diesem Beispiel N Laserstrahlen 12, auf die Trommeloberfläche, die die Trommeloberfläche in Form von Schraubenlinien überstreichen. Auf diese Weise werden bei jeder Trommelumdrehung eine bzw. mehrere Gruppen von N Aufzeichnungslinien in der Umfangsrichtung x (Hauptabtastrichtung) auf das Aufzeichnungsmaterial belichtet. Der Belichtungskopfträger 16 wird in der Vorschubrichtung y (Nebenabtastrichtung) mittels einer Vorschubspindel 13 bewegt, mit der erformschiüssig verbunden ist und die mit einem Vorschubantrieb 14 in Drehbewegung versetzt wird. Der Vorschubantrieb 14 ist ein Schrittmotor, wobei mit der Frequenz der dem Motor zugeführten Schrittmotortakte die Vorschubgeschwindigkeit genau eingestellt werden kann.

Durch die Verwendung mehrerer Belichtungsköpfe 11 wird die Produktivität des Belichters erhöht, insbesondere für die Belichtung von großformatigen Druckplatten 3, da eine Druckplatte 3 in kürzerer Zeit belichtet werden kann. In dem Beispiel von Fig. 1 sind zwei Belichtungsköpfe 11 vorhanden, die in der Vorschubrichtung im Abstand W angeordnet sind und jeweils ein Bündel von N Laserstrahlen 12 auf die Druckplatte 3 fokussieren. Die Druckplatte 3 wird dadurch gleichzeitig mit zwei Gruppen von Aufzeichnungslinien belichtet, die im axialen Abstand W die Trommeloberfläche überstreichen. Bei zwei Belichtungsköpfen 11 entspricht der Abstand W der halben Maximallänge, die der Belichter in Vorschubrichtung aufzeichnen kann, bei drei Belichtungsköpfen 11 einem Drittel dieser Maximallänge, usw. Nachdem der Belichtungskopfträger 16 und somit alle Belichtungsköpfe 11 die Vorschubstrecke W zurückgelegt haben, ist die Belichtung der Druckplatte 3 unabhängig vom Format der aufgezeichneten Druckvorlage 15 abgeschlossen. Je mehr Belichtungsköpfe 11 vorhanden sind, desto kürzer ist die Vorschubstrecke W und damit die Belichtungszeit, die für die Aufzeichnung gebraucht wird.

Fig. 2 veranschaulicht die Aufzeichnung der Druckvorlage 15, die sich bei der Belichtung mit jeweils N Laserstrahlen 12 ergibt, auf der abgewickelten Trommeloberfläche 20. Auf die Trommeloberfläche 20 ist die Druckplatte 3 aufgespannt, auf der die Druckvorlage 15 aufgezeichnet wird. Die Aufzeichnung erfolgt jeweils parallel mit N Laserstrahlen 12, die als ein in Vorschubrichtung orientiertes lineares Array von Belichtungspunkten 21 abgebildet werden. Die Zahl der Belichtungspunkte 21 in dem Array beträgt beispielsweise N=64. Wenn die Belichtungstrommel 1 rotiert, werden mit dem ersten Belichtungskopf 11 Aufzeichnungsstreifen 22 von jeweils N parallelen Aufzeichnungslinien belichtet, die in Fig. 2 mit E1, E2, E3, usw. bezeichnet sind. Mit dem zweiten Belichtungskopf 11 werden im Abstand W gleichzeitig weitere Aufzeichnungsstreifen 22 belichtet, die in Fig. 2 mit F1, F2, F3, usw. bezeichnet sind. Jeder Belichtungskopf 11 belichtet ein separates Aufzeichnungsband 23, das sich jeweils aus den Aufzeichnungsstreifen 22 zusammensetzt. Die Vorschubgeschwindigkeit der Belichtungsköpfe 11 ist so eingestellt, dass sie sich nach einer Trommelumdrehung um die Breite eines Aufzeichnungsstreifens 22 in Vorschubrichtung bewegt haben, so dass sich die bei jeder Trommelumdrehung belichteten Aufzeichnungsstreifen 22 nahtlos aneinander anschließen. Bei einer anderen Arbeitsweise, dem sogenannten Interleave-Schreibverfahren, werden die Laserstrahlen nicht als N Belichtungspunkte mit dem Abstand von jeweils einer Aufzeichnungslinienbreite abgebildet sondern mit einem größeren Abstand, der einem Vielfachen der Breite einer Aufzeichnungslinie entspricht. Bei geeigneten Kombinationen von Linienzahl N und Linienabstand werden in aufeinanderfolgenden Trommelumdrehungen nach und nach die Lücken zwischen den zunächst belichteten Aufzeichnungslinien mit weiteren Aufzeichnungslinien gefüllt, so dass schließlich doch eine lückenlose Belichtung des Aufzeichnungsmaterials erfolgt.

Am Ende des Vorschubwegs W schließt die letzte Aufzeichnungslinie des ersten Aufzeichnungsbandes 23 an die erste Aufzeichnungslinie des zweiten Aufzeichnungsbandes 23 an der Aufzeichnungsbandgrenze 24 an. An dieser Grenze kann es zu sichtbaren Dichtesprüngen kommen, wenn die bei gleichbleibendem Tonwert von den benachbarten Belichtungsköpfen 11 aufgezeichneten Flächendeckungen nicht exakt übereinstimmen. Für solche Dichtesprünge in einer einheitlichen Fläche gleichen Tonwertes ist das Auge besonders empfindlich, da auch sehr geringe Dichteänderungen unter 0,5% wahrgenommen werden können. Die Dichtesprünge werden dadurch verursacht, dass die von den Laserstrahlen 12 in den verschiedenen Belichtungsköpfen 11 auf das Aufzeichnungsmaterial fokussierten Belichtungspunkte 21 geringfügig unterschiedliche Durchmesser haben können. Diese Unterschiede können durch eine entsprechende Anpassung der Laserleistung ausgeglichen werden.

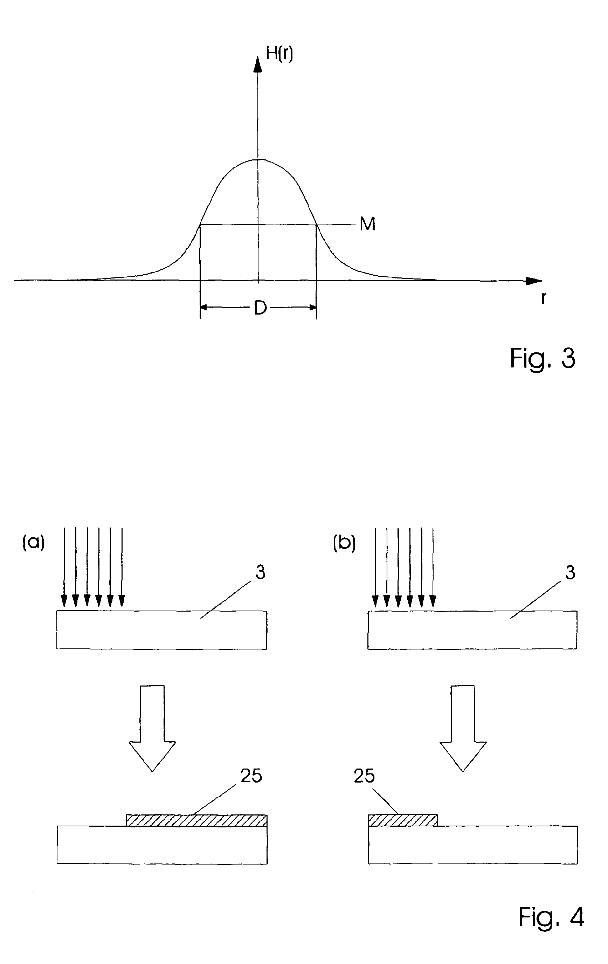

Die Rasterpunkte werden bei der Belichtung der Druckvorlagen aus vielen kleinen Belichtungspunkten zusammengesetzt, z.B. mit einer Auflösung von 1000 Belichtungspunkten/cm. Um diese Auflösung zu erreichen, müssen die Aufzeichnungslinien einen Abstand a = 10 µm haben. Ob der Durchmesser der Belichtungspunkte ebenfalls auf D = 10µm eingestellt werden muss, hängt vom Strahlprofil des Laserstrahls und von den Belichtungseigenschaften des Aufzeichnungsmaterials ab. Das Strahlprofil einer Laserdiode hat die Form einer Gauß-Glockenkurve, wie sie in Fig. 3 gezeigt ist. Die Energiedichte H(r) hat in der Mitte des Strahls einen Maximalwert und fällt mit zunehmendem Radius r nach einer Gaußfunktion ab.

Für die weitere Erläuterung eines Ausführungsbeispiels der Erfindung wird angenommen, dass die Druckvorlage auf eine sogenannte Thermal-Druckplatte aufgezeichnet wird, bei der eine Polymerschicht bildmäßig durch die Einwirkung der Laserenergie zerstört und abgetragen wird. Die verbleibenden Bereiche der Polymerschicht sind später in der Druckmaschine die farbführenden Bereiche, d.h. sie nehmen die Druckfarbe an und übertragen sie auf den Bedruckstoff. Eine solche Druckplatte ist eine positiv arbeitende Druckplatte, da die nicht farbführenden Stellen bildmäßig belichtet werden. Die Bezeichnung "positiv" wird aus dem Vergleich mit dem konventionellen Umkopieren eines positiven Farbauszugfilms auf eine Druckplatte abgeleitet, bei dem die Druckplatte durch die transparenten Filmbereiche hindurch belichtet wird, d.h. auch an den nicht farbführenden Stellen. Thermal-Druckplatten, die direkt mit einem Laser belichtet werden, weisen eine Schwellencharakteristik auf, d.h. die Polymerschicht wird zerstört, wenn die Energiedichte H(r) einen Schwellwert M überschreitet und die Polymerschicht bleibt bei einer geringeren Energiedichte erhalten (Fig. 3). Daraus ergibt sich unmittelbar, dass der Durchmesser D der Belichtungspunkte 21 vergrößert werden kann, wenn die Laserenergie erhöht wird, und dass der Durchmesser D der Belichtungspunkte 21 verkleinert wird, wenn die Laserenergie verringert wird. Da es sich um eine positiv arbeitende Druckplatte handelt, verändert sich die Flächendeckung der farbführenden Bereiche umgekehrt zur Veränderung des Durchmessers D, so dass die Flächendeckung also durch eine Erhöhung der Laserenergie verringert wird und durch eine Verringerung der Laserenergie erhöht wird. Für die Druckplatte Kodak Polychrome Graphics Electra Excel wurde beispielsweise gemessen, dass die Laserenergie um 3,6 mW erhöht werden muss, um die Flächendeckung um 1% zu reduzieren. Für andere Druckplatten ergeben sich etwas andere Werte, je nach der Lichtempfindlichkeit der Druckplatte und der genauen Form des Strahlprofils. Bei einer negativ arbeitenden Druckplatte, bei der die farbführenden Stellen bildmäßig belichtet werden, bewirkt eine Erhöhung der Laserenergie auch eine entsprechende Erhöhung der aufgezeichneten Flächendeckung. Fig. 4a zeigt schematisch die Lage der farbführenden Bereiche 25 einer positiv arbeitenden Druckplatte 3 relativ zu den belichteten Stellen. Fig. 4b zeigt dieselbe Relation bei einer negativ arbeitenden Druckplatte 3.

Nach dem erfindungsgemäßen Verfahren werden die für den Abgleich der Belichtungsköpfe 11 notwendigen Korrekturwerte der Laserenergie ermittelt, indem mit allen Belichtungsköpfen 11 gleichzeitig eine besondere Testform aufgezeichnet wird, nachdem die Laserenergien der Laserstrahlen 12 zunächst auf einen nominellen Arbeitspunkt eingestellt wurden. Eine hier nicht erläuterte Regelungseinrichtung sorgt dafür, dass die N Laserstrahlen 12 innerhalb jedes Belichtungskopfes 11 stets die gleiche einmal eingestellte Laserenergie abstrahlen. Im folgenden werden die Lasereinheiten, die in jedem Belichtungskopf 11 die N Laserstrahlen 12 als Array von Belichtungspunkten 21 erzeugen, auch als Lasermodul bzw. Modul bezeichnet. Weiterhin beziehen sich Angaben wie "Veränderung der Laserenergie um ... mW" immer auf alle Laserstrahlen 12 eines Moduls, d.h. die Energie aller Laserstrahlen wird um den gleichen Betrag verändert.

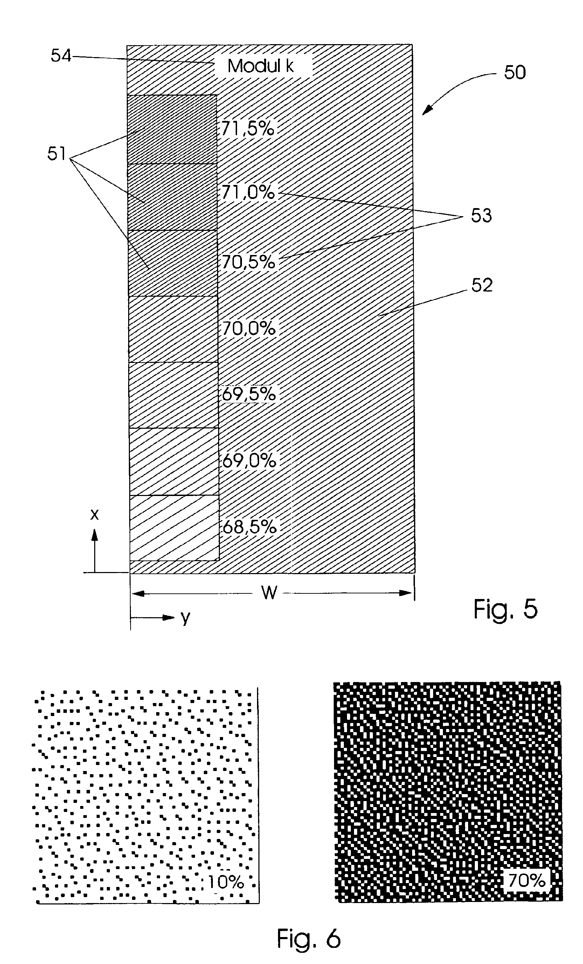

Fig. 5 zeigt den Aufbau der erfindungsgemäßen Testform 50. Die Testform 50 wird in der Vorschubrichtung y über die ganze Breite W eines Aufzeichnungsbandes 23 belichtet. Die Ausdehnung der Testform 50 in der Umfangsrichtung x ist beliebig. Die Testform 50 enthält mehrere Testfelder 51 auf einer Hintergrundfläche 52. Die Hintergrundfläche 52 ist mit einem konstanten Tonwert gerastert, beispielsweise mit dem Tonwert 70,0%. Dieser Tonwert eignet sich besonders gut für die visuelle Beurteilung kleinster Dichteunterschiede. Eins der Testfelder 51 ist mit dem gleichen Tonwert gerastert wie die Hintergrundfläche 52, die übrigen Testfelder 51 sind mit Tonwerten gerastert, die in kleinen Schritten sowohl nach unten als auch nach oben von dem Tonwert der Hintergrundfläche 52 abweichen, beispielsweise in Schritten von 0,5%. Die Zahl der Testfelder 51 ist beliebig, beispielsweise können 21 Testfelder 51 im Tonwertbereich von 65% bis 75% vorgesehen werden. In Fig. 5 sind zur besseren Übersicht nur sieben Testfelder 51 gezeigt. Die Testfelder 51 sind unmittelbar am linken Rand der Testform 50, d.h. in Umfangsrichtung x der Aufzeichnung, angeordnet. Die nominellen Tonwerte der Testfelder 51 sind neben den Testfeldern 51 durch Tonwertzahlen 53 gekennzeichnet, die bei der Aufzeichnung der Testform 50 mitbelichtet werden. Weiterhin wird am oberen Rand der Testform 50 eine Modulbezeichnung 54 mitbelichtet, die angibt, mit welchem Lasermodul die Testform 50 aufgezeichnet wurde. Die unterschiedlichen gerasterten Tonwerte der Testfelder 51 und der Hintergrundfläche 52 sind in Fig. 5 durch unterschiedlich dichte Schraffuren gekennzeichnet.

Die Rasterung der Testfelder 51 und der Hintergrundfläche 52 kann mit einem beliebigen Rasterverfahren erfolgen. Bevorzugt wird jedoch eine frequenzmodulierte Rasterung verwendet. Fig. 6 zeigt in starker Vergrößerung Beispiele dafür mit den Tonwerten 10% und 70%. Das Raster enthält eine unregelmäßige Anordnung von sehr kleinen Rasterpunkten, etwa mit einer Größe von 20 µm, deren Anzahl mit zunehmendem Tonwert wächst. Ihre Größe wird dabei nicht verändert. Bei Tonwerten über 50% berühren sich mehr und mehr Rasterpunkte, bis schließlich bei hohen Tonwerten eine schwarze Fläche entsteht, in der unregelmäßig kleine "Löcher" verstreut sind. Die frequenzmodulierte Rasterung reagiert empfindlicher auf Veränderungen der Laserleistung, d.h. die aufgezeichnete Flächendeckung verändert sich stärker als bei einer konventionellen amplitudenmodulierten Rasterung, bei der regelmäßig angeordnete Rasterpunkte in ihrer Größe variiert werden. Sie eignet sich deshalb besser für die Testform 50, mit der Einstellwerte für die Laserleistung in den Belichtungsköpfen ermittelt werden.

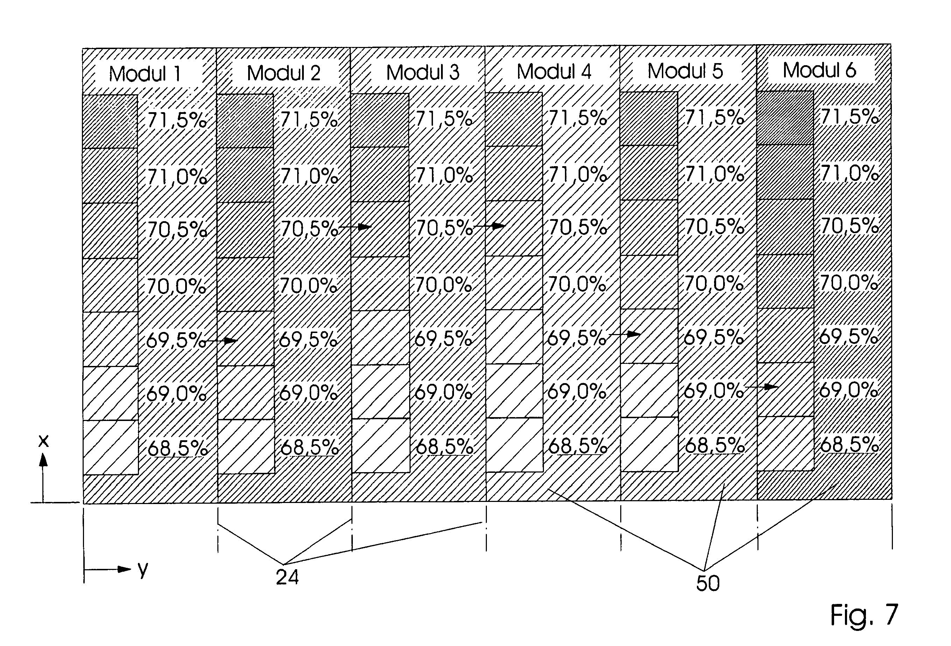

Die Testform 50 wird mit allen Lasermodulen der Belichtungsköpfe 11 gleichzeitig aufgezeichnet. Fig. 7 zeigt eine solche Testbelichtung für ein Beispiel, bei dem in einem Belichter sechs Belichtungsköpfe 11 vorhanden sind und aufeinander abgeglichen werden sollen. Die Testbelichtung enthält also sechs in Vorschubrichtung y nebeneinander belichtete Testformen 50, die an den Aufzeichnungsbandgrenzen 24 aneinander stoßen. Da die Laserleistungen noch nicht abgeglichen sind, werden die Testformen 50 von den Lasermodulen mit etwas unterschiedlicher Flächendeckung aufgezeichnet, was in Fig. 7 wieder durch unterschiedlich dichte Schraffuren gekennzeichnet ist. Trotz der unterschiedlichen Flächendeckungen hat natürlich in allen Testformen 50 das Testfeld 51 mit dem nominellen Tonwert 70,0% die gleiche Flächendeckung wie die Hintergrundfläche 52 derselben Testform 50. An den Aufzeichnungsbandgrenzen 24 grenzen jeweils die Hintergrundfläche 52 einer Testform 50 und die Testfelder 51 der benachbarten Testform 50 direkt aneinander. Das ermöglicht eine einfache visuelle Auswertung der Testbelichtung durch den Vergleich der mit einem Modul belichteten Hintergrundfläche 52 mit den durch den benachbarten Modul belichteten Testfeldern 51. Der visuelle Vergleich ist genauer als eine Dichtemessung, die mit einem Messfehler von etwa 1 % Flächendeckung behaftet wäre. Beim visuellen Vergleich sind Dichteunterschiede von < 0,5% noch wahrnehmbar. In der Testbelichtung könnten die mit dem Modul 1 belichteten Testfelder 51 auch wegfallen, da sie mit keiner benachbarten Hintergrundfläche 52 verglichen werden, d.h. für den Modul 1 würde es genügen, nur die Hintergrundfläche 52 zu belichten.

In dem Beispiel von Fig. 7 hat die mit dem Modul 2 belichtete Testform 50 eine etwas größere Flächendeckung als die mit dem Modul 1 belichtete Testform 50, d.h. sie ist insgesamt etwas dunkler. Das drückt sich darin aus, dass in der Testform 50 des Moduls 2 das Testfeld 51 mit dem nominellen Tonwert 69,5% bereits die gleiche Flächendeckung erreicht wie die Hintergrundfläche 52 in der Testform 50 des Moduls 1 mit dem nominellen Tonwert 70,0%. Zur besseren Übersicht ist diese Übereinstimmung in Fig. 7 mit einem Pfeil gekennzeichnet. Die Testform 50 des Moduls 3 ist insgesamt etwas heller belichtet als die Testform 50 des Moduls 2. Deshalb wird die Flächendeckung der Hintergrundfläche 52 des Moduls 2 von dem Modul 3 erst mit dem Testfeld 51 mit dem nominellen Tonwert 70,5% erreicht. Der visuelle Vergleich wird an jeder Aufzeichnungsbandgrenze 24 zwischen zwei Modulen durchgeführt, und die nominellen Tonwerte der Testfelder 51, deren Flächendeckung jeweils mit der Flächendeckung des Hintergrunds des vorangehenden Moduls übereinstimmt bzw. den geringsten Unterschied aufweist, werden in die erste Zeile einer Auswertungstabelle eingetragen.

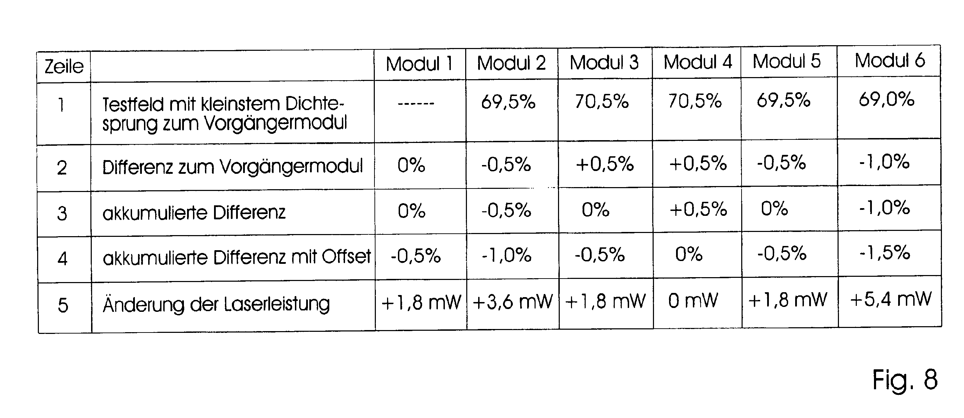

Fig. 8 zeigt die Auswertungstabelle für die Testbelichtung von Fig. 7. In einer zweiten Zeile der Auswertungstabelle werden die Differenzen der nominellen Tonwerte von Zeile 1 zum jeweiligen Vorgängermodul gebildet. Diese Differenzen werden anschließend vom Modul 1 beginnend bis zum jeweils aktuellen Modul aufsummiert, und die Summe wird in eine dritte Zeile der Auswertungstabelle eingetragen. Die Werte in Zeile 3 geben somit an, welche Flächendeckungsdifferenzen die mit den jeweiligen Modulen aufgezeichneten Testformen 50 bezogen auf die mit dem Modul 1 geschriebene Testform haben. Auf Basis dieser Differenzen könnten bereits Korrekturwerte berechnet werden, um welche Beträge die Laserleistungen der einzelnen Module erhöht bzw. erniedrigt werden müssen, um die Belichtungsköpfe 11 aufeinander abzugleichen. Um zu vermeiden, dass bei einer Verringerung der Laserleistung in einem Modul der Schwellwert M unterschritten wird, bei dem die Polymerschicht der Druckplatte sicher und vollständig abgetragen wird (Fig. 3), wird von den Werten in Zeile 4 der Auswertungstabelle noch ein gemeinsamer Offsetwert abgezogen, damit keine positiven Differenzwerte auftreten. Die mit dem Offset versehenen Differenzwerte sind in der Zeile 5 der Auswertungstabelle eingetragen. Aus diesen Differenzwerten können dann mit der Kenntnis, dass beispielsweise eine Erhöhung der Laserleistung um 3,6 mW eine Reduzierung der Flächendeckung um 1% bewirkt, die für den Abgleich erforderlichen Leistungsänderungen direkt berechnet werden. Diese Korrekturwerte sind in der Zeile 5 der Auswertungstabelle eingetragen. Mit den korrigierten Laserleistungen werden jeweils weitere Testbelichtungen durchgeführt, wobei jedes Mal die Flächendeckungen von Hintergrundflächen 52 und benachbarten Testfeldern 51 wieder verglichen werden und daraus neue Korrekturwerte für die Laserleistungen berechnet werden. Nach wenigen Wiederholungen, typischerweise nach drei Iterationsschritten, ergeben die mit allen Lasermodulen belichteten Testformen 50 die gleichen Flächendeckungen, d.h. der Abgleich der Belichtungsköpfe 11 ist abgeschlossen. Die Genauigkeit des Abgleichs kann noch erhöht werden, wenn für die weiteren Iterationsschritte eine Testform 50 verwendet wird, bei der die Dichtestufen zwischen benachbarten Testfeldern 51 kleiner gewählt sind, z.B. 0,25%.

Das erfindungsgemäße Verfahren wurde am Beispiel einer positiv arbeitenden Druckplatte beschrieben. Es kann ebenso für negativ arbeitende Druckplatten sowie für andere Aufzeichnungsmaterialien verwendet werden, wobei nur zu beachten ist, in welche Richtung die Laserleistungen verändert werden müssen, um beispielsweise eine Verringerung der Flächendeckung zu bewirken, bzw. welche Schwellwerte oder andere Grenzwerte eingehalten werden müssen. Das Verfahren und die Testform 50 sind auch nicht auf die Anwendung in einem Außentrommelbelichter beschränkt, sondern sie können bei jeder Bauform eines Druckvorlagenbelichters eingesetzt werden, der eine Druckvorlage mit mehreren Belichtungsköpfen aufzeichnet.

## Patentansprüche

1. Verfahren zum Abgleichen der Belichtungsköpfe (11) eines Belichters, der mit mehreren Belichtungsköpfen (11) Druckvorlagen (15) auf ein Aufzeichnungsmaterial aufzeichnet, hinsichtlich der aufgezeichneten Flächendeckung, wobei
- jeder Belichtungskopf (11) ein Lasermodul enthält, das mindestens einen Laserstrahl (12) erzeugt und auf das Aufzeichnungsmaterial fokussiert,
- die Laserstrahlen (12) das Aufzeichnungsmaterial in einer Hauptabtastrichtung (x) überstreichen, während die Belichtungsköpfe (11) in einer Nebenabtastrichtung (y) an dem Aufzeichnungsmaterial entlang bewegt werden, und
- jeder Belichtungskopf (11) ein Aufzeichnungsband (23) aufzeichnet,
**dadurch gekennzeichnet, dass**
(a) eine Testbelichtung durchgeführt wird, in der jeder Belichtungskopf (11) in seinem Aufzeichnungsband (23) eine Testform (50) mit Testfeldern (51) und einer Hintergrundfläche (52) aufzeichnet,
(b) die aufgezeichnete Flächendeckung der Hintergrundfläche (52) einer Testform (50) mit den aufgezeichneten Flächendeckungen der Testfelder (51) einer benachbarten Testform (50) visuell verglichen werden,
(c) die Flächendeckungen der Testfelder (51) bestimmt werden, die mit der Flächendeckung des Hintergrunds des vorangehenden Moduls übereinstimmen bzw. den geringsten Unterschied aufweisen,
(d) Flächefldeckungsdifferenzen benachbarter Testformen durch Bildung der Differenzen der bestimmten Flächendeckungen zum jeweiligen Vorgängermodul bestimmt werden, und
(e) aus den Differenzen der Flächendeckungen in benachbarten Testformen (50) Korrekturwerte für die Laserleistung der Lasermodule in den Belichtungsköpfen (11) berechnet werden.

2. Verfahren nach Anspruch 1, **dadurch gekennzeichnet, dass** die Testfelder (51) einer Testform (50) und die Hintergrundfläche (52) einer benachbarten Testform (50) direkt aneinander grenzen.

3. Verfahren nach einem der Ansprüche 1 oder 2, **dadurch gekennzeichnet, dass** die Testfelder (51) und die Hintergrundfläche (52) einer Testform (50) mit einer frequenzmodulierten Rasterung gerastert sind.

4. Verfahren nach einem der Ansprüche 1 bis 3, **dadurch gekennzeichnet, dass** die Hintergrundfläche (52) einer Testform (50) mit einem ersten Tonwert gerastert ist und die Testfelder (51) derselben Testform (50) mit Tonwerten gerastert sind, die in kleinen Schritten um den ersten Tonwert herum variieren.

5. Verfahren nach Anspruch 4, **dadurch gekennzeichnet, dass** der erste Tonwert 70,0% beträgt und die Tonwerte der Testfelder (51) im Bereich von 65% bis 75% in Schritten von 0,5% variieren.

6. Verfahren nach einem der Ansprüche 1 bis 4, **dadurch gekennzeichnet, dass** die Testbelichtung und die Korrektur der Laserleistungen iterativ wiederholt wird, bis die aufgezeichneten Flächendeckungen in allen Testformen (50) einer Testbelichtung gleich sind.

7. Verfahren nach Anspruch 6, **dadurch gekennzeichnet, dass** für die weiteren Iterationen der Testbelichtung eine Testform (50) verwendet wird, in der die Tonwertschritte zwischen den Testfeldern (51) kleiner gewählt werden als für die ersten Testbelichtungen.

8. Druckplatte mit mehreren, gemäß einer Druckvorlage (15) belichteten Testformen (50) zur Verwendung beim Abgleichen von Belichtungsköpfen (11) eines Belichters, der in aneinandergrenzenden Aufzeichnungsbändern (23) mehrerer Belichtungsköpfe (11) eine Druckvorlage (15) auf ein Aufzeichnungsmaterial aufzeichnet, hinsichtlich der aufgezeichneten Flächendeckung,
**dadurch gekennzeichnet,**
**dass** die Testformen jeweils eine Hintergrundfläche (52) aufweisen, die mit einem ersten Tonwert gerastert ist, sowie mehrere Testfelder (51), die mit Tonwerten gerastert sind, die in kleinen Schritten um den ersten Tonwert herum variieren, wobei die Testfelder (51) an einer Kante der Testform (50) angeordnet sind, die in Hauptabtastrichtung (x) verläuft und mit der Aufzeichnungsbandgrenze (24) zweier Belichtungsköpfe (11) übereinstimmt, und wobei die Testfelder in der Nebenabtastrichtung (y) schmaler sind als die Breite der Testform (50) in der Nebenabtastrichtung, so dass jeweils die Hintergrundfläche (52) einer Testform (50) und die Testfelder (51) der benachbarten Testform (50) direkt aneinandergrenzen.

9. Testform (50) nach Anspruch 8, **dadurch gekennzeichnet, dass** der erste Tonwert 70,0% beträgt und die Tonwerte der Testfelder im Bereich von 65% bis 75% in Schritten von 0,5% variieren.

10. Testform (50) nach einem der Ansprüche 8 oder 9, **dadurch gekennzeichnet, dass** die Testfelder (51) und die Hintergrundfläche (52) mit einer frequenzmodulierten Rasterung gerastert sind.

## Claims

1. Method of calibrating the exposure heads (11) of an exposure device including a number of exposure heads (11) for recording originals (15) on a recording material in terms of the recorded area coverage, wherein
- every exposure head (11) includes a laser module that generates at least one laser beam (12) and focuses the laser beam onto the recording material,
- the laser beams (12) scan the recording material in a main scanning direction (x) while the exposure heads (11) are moved along the recording material in a secondary scanning direction (y), and
- wherein each exposure head (11) records a recording strip (23),
**characterized by**
the facts that
(a) a test exposure is made in which each exposure head (11) records a test form (50) including test fields (51) and a background area (52) in its recording strip (23)
(b) the recorded area coverage of the background surface (52) is visually compared to the recorded area coverages of the test fields (51) in an adjacent test form (50),
(c) the area coverages of those test fields (51) are determined that correspond to the area coverage of the background of the previous module or exhibit the lowest degree of deviation,
(d) area coverage differences of adjacent test forms are determined by forming the differences of the determined area coverages relative to the respective previous module, and
(e) that correcting values for the laser output of the laser modules in the exposure heads (11) are calculated from the differences of the area overages in adjacent test forms (50).

2. Method according to Claim 1, **characterized by** the fact that the test fields (51) of a test form (50) and the background area (52) of a neighbouring test form (50) are directly adjacent to each other.

3. Method according to one of Claims 1 or 2, **characterized by** the fact that the test fields (51) and the background area (52) of a test form (60) are rastered with a frequency-modulated rastering.

4. Method according to one of Claims 1 to 3, **characterized by** the fact that the background area (52) of a test form (50) is rastered with a first tonal value and the test fields (51) of the same test form (50) are rastered with tonal values that vary in small steps around the first tonal value.

5. Method according to Claim 4, **characterized by** the fact that the first tonal value amounts to 70.0% and the tonal values of the test fields (51) vary in steps of 0.5% in a range from 65% to 75%.

6. Method according to one of Claims 1 to 4, **characterized by** the fact that the test exposure and the correction of the laser output are iteratively repeated until the recorded area coverages are the same in all test forms (50) of a test exposure.

7. Method according to Claim 6, **characterized by** the fact that for the further iterations of the test exposure, a test form (50) is used in which the tonal value steps between the test fields (51) are selected to be smaller than for the first test exposures.

8. Printing plate including several test forms (50) that are exposed in accordance with an original (15) to be used in calibrating exposure heads (11) of an exposure device that records an original (15) on a recording material in adjacent recording strips (23) of multiple exposure heads (11) in terms of the recorded area coverage,
**characterized by**
the fact that each test form includes a background area (52) that is rastered with a first tonal value and several test fields (51) that are rastered with tonal values that vary in small steps about the first tonal value, the test fields (51) being arranged at an edge of the test form (50) that extends in the main scanning direction (x) and corresponds to the recording strip border (24) of two exposure heads (11), the test fields in the secondary scanning direction (y) being smaller than the width of the test form (50) in the secondary scanning direction so that the background area (52) of a test form (50) and the test fields (51) of the adjacent test form (50) are directly adjacent to each other.

9. Test form (50) according to Claim 8, **characterized by** the fact that the first tonal value is 70.0% and the tonal values of the test fields vary in steps of 0.5% in a range from 65% to 75%.

10. Test form (50) according to one of Claims 8 or 9, **characterized by** the fact that the test field (51) and the background area (52) are rastered with a frequency-modulated rastering.

## Revendications

1. Procédé pour l'ajustement des têtes d'exposition (11) d'une unité d'exposition, qui enregistre avec plusieurs têtes d'exposition (11) des modèles d'impression (15) sur un matériau d'enregistrement en ce qui concerne la couverture de la surface enregistrée,
- chaque tête d'exposition (11) comprenant un module laser, qui génère au moins un rayon laser (12) et qui focalise sur le matériau d'enregistrement,
- les rayons laser (12) balayant le matériau d'enregistrement dans une direction principale de balayage (x), tandis que les têtes d'exposition (11) sont déplacées dans une direction secondaire de balayage (y) le long du matériau d'enregistrement, et
- chaque tête d'enregistrement (11) enregistrant une bande d'enregistrement (23),
**caractérisé en ce que**
(a) une exposition test est effectuée, dans laquelle chaque tête d'exposition (11) enregistre dans sa bande d'enregistrement (23) une forme test (50) avec des champs test (51) et une surface d'arrière plan (52),
b) la couverture enregistrée de la surface d'arrière-plan (52) d'une forme test (50) est comparée visuellement avec les couvertures enregistrées des champs test (51) d'une forme test voisine (50),
(c) les couvertures de surface des champs test (51) qui correspondent à la couverture de surface de l'arrière-plan du module précédent respectivement présentent la plus petite différence, sont définies, et
d) à partir des différences des couvertures de surface dans des formes de test voisines (50), des valeurs de correction pour la puissance des modules laser dans les têtes d'exposition (11), sont calculées.

2. Procédé selon la revendication 14, **caractérisé en ce que** les champs test (51) d'une forme test (50) et la surface d'arrière-plan d'une forme test voisine (50) sont directement contigus.

3. Procédé selon l'une des revendications 1 ou 2, **caractérisé en ce que** les champs test (51) et la surfaces d'arrière plan (52) d'une forme test (50) sont munis d'une trame à modulation de fréquence.

4. Procédé selon l'une des revendications 1 à 3, **caractérisé en ce que** les surfaces d'arrière plan (52) d'une forme test (50) est tramée avec une première valeur tonale et les champs test (51) de la même forme test (50) sont tramés avec des valeurs tonales qui varient en petites étapes autour de la première valeur tonale.

5. Procédé selon la revendication 4, **caractérisé en ce que** la première valeur tonale est de 70,0 % et les valeurs tonales des champs de test (50) varient par étape de 0,5 % dans la plage comprise entre 65 % et 75 %.

6. Procédé selon l'une des revendications 1 à 4, **caractérisé en ce que** l'exposition test et la correction des puissances laser sont répétées de manière itérative jusqu'à ce que les couvertures de surface enregistrées soient identiques dans toutes les formes test (50) d'une exposition test.

7. Procédé selon la revendication 6, **caractérisé en ce que** pour les autres itérations de l'exposition test, il est utilisé une forme test (50) dans laquelle les étapes de valeur tonale entre les champs test (51) sont sélectionnées plus petites que pour les premières expositions test.

8. Plaque d'impression avec plusieurs formes test (50) exposées selon un modèle d'impression (15) pour être utilisée lors de l'ajustement de têtes d'exposition (11) d'une unité d'exposition qui enregistre dans des bandes d'enregistrement contigües (23) de plusieurs têtes d'exposition (11) un modèle d'impression (15) sur un matériau d'enregistrement en ce qui concerne la couverture de surface enregistrée, **caractérisée en ce que** les formes test présentent respectivement une surface d'arrière plan (52) qui est tramée avec une première valeur tonale, ainsi que plusieurs champs test (51) qui sont tramés de valeurs tonales qui varient autour de la première valeur tonale en petites étapes, les champs test (51) étant disposés sur un bord de la forme test (50) qui s'étend dans la direction principale de balayage (x) et correspond à la limite de bande d'enregistrement (24) de deux têtes d'exposition (11) et les champs test étant plus étroits dans la direction auxiliaire de balayage (y) que la largueur de la forme test (50) dans la direction auxiliaire de balayage, de sorte que respectivement la surface d'arrière plan (52) d'une forme test (50) et les champs test (51) de la forme test voisine (50) sont directement contigus.

9. Forme test (50) selon la revendication 8, **caractérisée en ce que** la première valeur tonale est de 70,0 % et les valeurs tonales des champs de test (51) varient par étape de 0,5 % dans la plage comprise entre 65 % et 75 %.

10. Forme test (50) selon l'une des revendications 8 ou 9, **caractérisée en ce que** les champs test (51) et la surface d_{'}arrière plan (52) d'une forme test (50) sont munies d'une trame à modulation de fréquence.
